# EUROPEAN PATENT SPECIFICATION

(11) **EP 4 227 197 B1**
(45) Date of publication and mention of the grant of the patent: **16.07.2025**
(21) Application number: 23156520.1
(22) Date of filing: 14.02.2023
(51) Int. Cl.: B62K 3/04, B62K 19/36, B62K 19/18, B62J 1/08

(54) **BICYCLE FRAME WITH CANTILEVERED SEATMAST AND SEATPOST SECURING ASSEMBLY**
FAHRRADRAHMEN MIT FREITRAGENDEM AUFNAHMEROHR FÜR EINEN SATTELSTÜTZROHR UND SATTELSTÜTZROHRSICHERUNGSANORDNUNG
CADRE DE BICYCLETTE AVEC SUPPORT DE TIGE DE SELLE EN PORTE-À-FAUX ET ENSEMBLE DE FIXATION DE TIGE DE SELLE

(30) Priority: 15.02.2022 US 202217651123
(43) Date of publication of application: 16.08.2023
(73) Proprietor: Trek Bicycle Corporation, Waterloo, WI 53594 (US)
(72) Inventor: BEDINGHAUS, Alex, Cottage Grove, WI 53527 (US)
(74) Representative: J A Kemp LLP

(56) References cited:
- DE-A1- 4 329 795
- US-A- 499 707
- US-A- 5 222 751
- US-A1- 2012 274 041

## Description

### BACKGROUND

The present application relates to a bicycle frame with a cantilevered seatmast and a seatpost securing assembly. A bicycle saddle, or seat, is a contact point of a bicycle that is used to support a portion of the rider's weight. Design considerations for a bicycle saddle system include safety of the rider, the amount of comfort that the saddle system provides to the rider, the amount of difficulty involved in making saddle height adjustments by the rider, the amount of air resistance (drag) caused by the configuration of the saddle system, the overall range of the adjustability of the saddle to suit the rider, etc.

DE 43 29 795 A1 discloses a bicycle frame according to the preamble of claim 1.

### SUMMARY

The invention is set out in the appended set of claims.

A bicycle frame according to the invention includes a top tube that connects to a head tube at a front portion of the bicycle frame. The bicycle frame also includes a first seat stay that connects to the top tube at a first point of intersection and a second seat stay that connects to the top tube at a second point of intersection such that a back portion of the top tube extends beyond the first point of intersection and the second point of intersection so that the top tube is a cantilever. The bicycle frame also includes a seatmast sized to receive a seatpost. The seatmast extends from the back portion of the top tube that forms the cantilever.

According to the invention, the bicycle frame also includes a down tube that extends from the head tube to a bottom bracket and a seat tube that extends from the bottom bracket. The bicycle frame also includes a first support that extends from the seat tube to the first seat stay and a second support that extends from the seat tube to the second seat stay. The bicycle frame also includes an opening formed under the top tube and under the seat mast and configured to convey turbulent air from underneath the top tube to behind the bicycle frame. According to the invention, at least a portion of the opening is formed by a bottom portion of the top tube, at least a portion of the opening is formed by the first seat stay and the second seat stay, and at least a portion of the opening is formed by the first support and the second support.

The bicycle frame can also include a first chain stay that extends from the bottom bracket to the first seat stay and a second chain stay that extends from the bottom bracket to the second seat stay. In another embodiment, the bicycle frame includes a plurality of slots in a rear-facing portion of the seatmast. The seatpost can be mounted in the seatmast, and the seatpost includes a cavity configured to receive a seatpost securing assembly. The seatpost securing assembly includes a compression bolt, and the seatpost can include a plurality of openings sized to receive the compression bolt. In an illustrative embodiment, the plurality of openings are adjacent to the cavity of the seatpost that includes the seatpost securing assembly. The plurality of openings are also aligned with the plurality of slots in the rear-facing portion of the seatmast.

The seatpost securing assembly can include a cam lever and a wedge. The cam lever is configured to press the wedge against an interior surface of the seatmast to secure the seatpost to the seatmast. A retaining clip of the seatpost securing assembly is configured to secure the wedge to the cam lever. In another embodiment, the cam lever includes a first opening configured to receive a barrel nut, where the barrel nut includes a threaded opening configured to receive the compression bolt. In an illustrative embodiment, responsive to being rotated, the compression bolt pushes the barrel nut and at least a portion of the cam lever toward the wedge and causes the wedge to contact the interior surface of the seatmast. The cam lever can also include a second opening configured to receive the barrel nut.

In another illustrative embodiment, the cam lever controls a height of the seatpost based at least in part on an orientation of the cam lever within the seatpost. The cam lever includes a first portion and a second portion. In a first orientation of the cam lever the first portion is positioned toward a top of the cavity in the seatpost and the second portion is positioned toward a bottom of the cavity in the seatpost. In a second orientation of the cam lever the first portion is positioned toward a bottom of the cavity in the seatpost and the second portion is positioned toward a top of the cavity in the seatpost.

Other principal features and advantages of the invention will become apparent to those skilled in the art upon review of the following drawings, the detailed description, and the appended claims.

### BRIEF DESCRIPTION OF THE DRAWINGS

Illustrative embodiments will hereafter be described with reference to the accompanying drawings, wherein like numerals denote like elements. The foregoing and other features of the present disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings.
Fig. 1A depicts a bicycle with a frame that includes a cantilevered seatmast in accordance with a first illustrative embodiment.
Fig. 1B depicts a bicycle frame that includes a cantilevered seatmast in accordance with a second illustrative embodiment.
Fig. 2A is a first side view of a bicycle frame with a cantilevered seatmast 205 in accordance with an illustrative embodiment.
Fig. 2B is a second side view of the bicycle frame with the cantilevered seatmast in accordance with an illustrative embodiment.
Fig. 2C is a front view of the bicycle frame with the cantilevered seatmast in accordance with an illustrative embodiment.
Fig. 2D is a rear view of the bicycle frame with the cantilevered seatmast in accordance with an illustrative embodiment.
Fig. 2E is a bottom view of the bicycle frame with the cantilevered seatmast in accordance with an illustrative embodiment.
Fig. 2F is a top view of the bicycle frame with the cantilevered seatmast in accordance with an illustrative embodiment.
Fig. 3 is a rear perspective view of the bicycle frame which more clearly shows the opening formed below the seatmast in accordance with an illustrative embodiment.
Fig. 4A is a close-up sectional view of a seatpost mounted within the seatmast in accordance with an illustrative embodiment.
Fig. 4B is a cross-sectional view of the seatpost included an exploded view of the seatpost securing assembly in accordance with an illustrative embodiment.
Fig. 4C depicts a first position of the seatpost securing assembly in accordance with an illustrative embodiment.
Fig. 4D depicts a second position of the seatpost securing assembly in accordance with an illustrative embodiment.
Fig. 4E depicts a third position of the seatpost securing assembly in accordance with an illustrative embodiment.
Fig. 5A depicts a first orientation of the cam lever in accordance with an illustrative embodiment.
Fig. 5B depicts a second orientation (flipped) of the cam lever in accordance with an illustrative embodiment.
Fig. 6A depicts the seatpost mounted in a highest configuration in accordance with an illustrative embodiment.
Fig. 6B depicts the seatpost mounted in a lowest configuration in accordance with an illustrative embodiment.

### DETAILED DESCRIPTION

Described herein is a bicycle frame with a cantilevered seatpost that is designed to reduce resistance due to airflow, improve rider comfort, and lower the overall weight of the bicycle frame. More specifically, a seatmast of the bicycle frame, which is designed to receive the seatpost, is formed as a cantilever by the seat stays and the top tube of the bicycle frame. This cantilever design allows for inclusion of an opening formed between the seat tube (or supports that extend from the seat tube), the seat stays, and the top tube of the bicycle frame. As discussed in more detail below, this opening acts to divert turbulent air through the bicycle frame to reduce overall air resistance for the rider. In other words, the opening acts to energize the wake typically seen behind the seat stay/seatmast region of the bicycle. Also described herein is a seatpost securing assembly that is positioned within the seatmast and used to secure and adjust a seatpost of the bicycle.

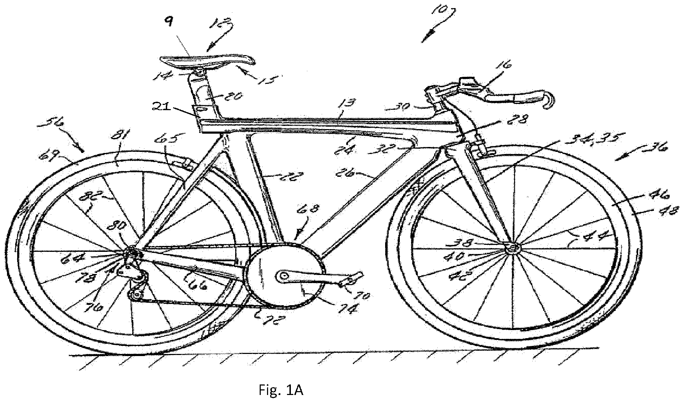

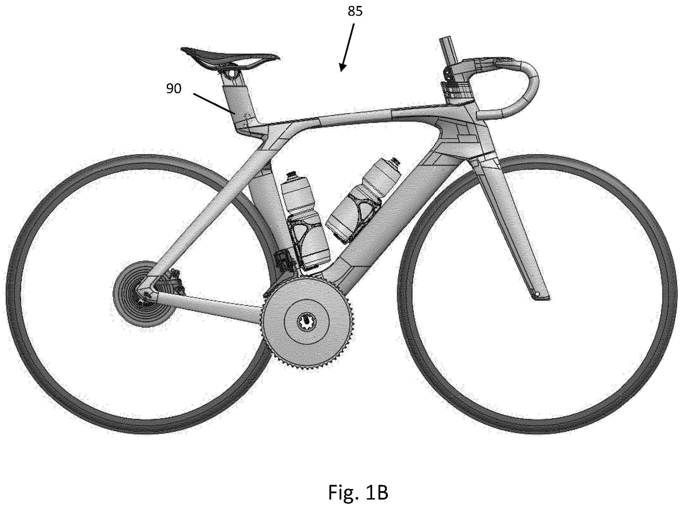

Fig. 1A depicts a bicycle 10 with a frame 13 that includes a cantilevered seatmast 21 in accordance with a first illustrative embodiment. Fig. 1B depicts a bicycle frame 85 that includes a cantilevered seatmast 90 in accordance with a second illustrative embodiment. Referring to Fig. 1A, the bicycle 10 includes a saddle assembly 12 and handlebars 16 attached to the frame 13. A saddle (or seat) 9 is part of the saddle assembly 12. A saddle clamp 14 is engaged with an underside 15 of saddle assembly 12 and cooperates with a seatpost 20 that slidably engages the seatmast 21 of frame 13. As such, the position of the saddle 9 is adjustable relative to the frame 13 to accommodate different riders. A top tube 24 and a down tube 26 of the frame 13 are connected to a seat (or saddle) tube 22 and to a head tube 28 of the frame 13.

Handlebars 16 of the bicycle 10 are connected to a steerer tube 30 that passes through head tube 28 and engages a fork crown 32. A pair of fork blades 34, 35 extend from generally opposite ends of fork crown 32 and are constructed to support a front wheel assembly 36 at an end thereof or fork tip 38. The fork blades 34, 35 can be part of a suspension bicycle fork or a rigid bicycle fork. As also shown in Fig. 1, fork tips 38 engage generally opposite sides of an axle 40 that is constructed to engage a hub 42 of front wheel assembly 36. A number of spokes 44 extend from hub 42 to a rim 46 of front wheel assembly 36. A tire 48 is engaged with rim 46 such that rotation of tire 48, relative to forks 34, rotates rim 46 and hub 42.

A rear wheel assembly 56 is positioned generally concentrically about a rear axle 64. A seat stay 65 and a chain stay 66 offset rear axle 64 from a crankset 68. The crankset 68 includes pedals 70 that are operationally connected to a flexible drive such as a chain 72 via a chain ring or sprocket 74. Rotation of the chain 72 communicates a drive force to a rear section 76 of the bicycle 10 having a gear cluster 78 positioned thereat. The gear cluster 78 is generally concentrically orientated with respect to the rear axle 64 and includes a number of variable diameter gears. The gear cluster 78 is operationally connected to a hub 80 associated with a rear tire 69 of rear wheel assembly 56. A number of spokes 82 extend radially between the hub 80 and a rim 81 that supports tire 69 of rear wheel assembly 56. As is commonly understood, rider operation of the pedals 70 drives the chain 72 thereby driving the rear tire 69 which in turn propels the bicycle 10.

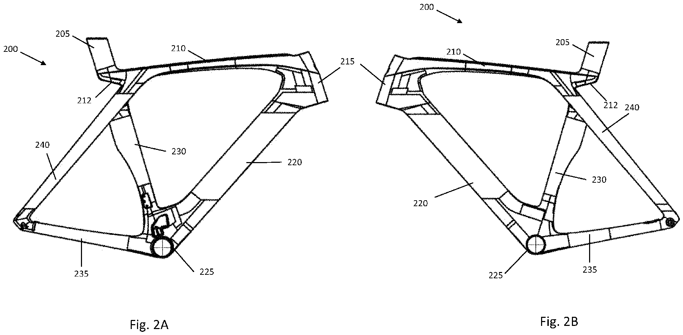

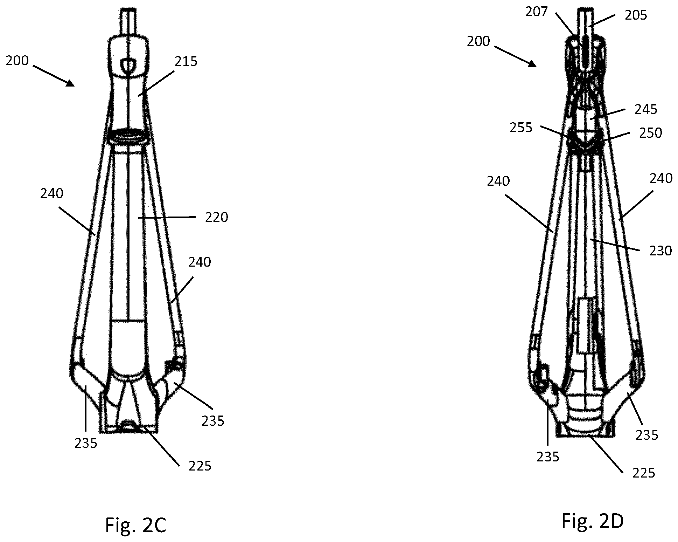

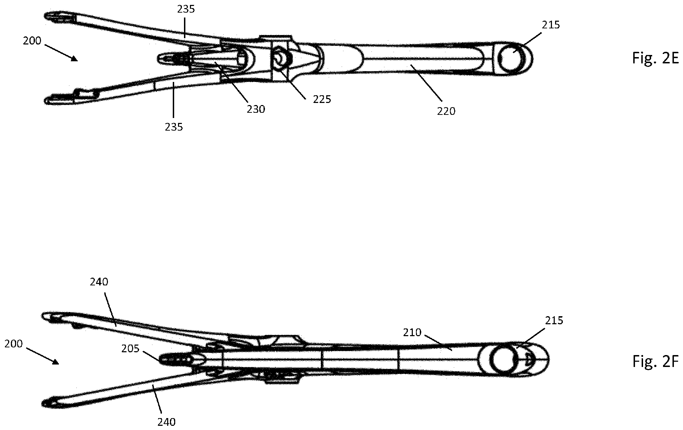

Figs. 2A-2F depict various views of the bicycle frame with a cantilevered seatmast. Specifically, Fig. 2A is a first side view of a bicycle frame 200 with a cantilevered seatmast 205 in accordance with an illustrative embodiment. Fig. 2B is a second side view of the bicycle frame 200 with the cantilevered seatmast 205 in accordance with an illustrative embodiment. Fig. 2C is a front view of the bicycle frame 200 with the cantilevered seatmast 205 in accordance with an illustrative embodiment. Fig. 2D is a rear view of the bicycle frame 200 with the cantilevered seatmast 205 in accordance with an illustrative embodiment. Fig. 2E is a bottom view of the bicycle frame 200 with the cantilevered seatmast 205 in accordance with an illustrative embodiment. Fig. 2F is a top view of the bicycle frame 200 with the cantilevered seatmast 205 in accordance with an illustrative embodiment.

The bicycle frame 200 also includes a top tube 210 from which the cantilevered seatmast 205 extends. The top tube 210 connects to a head tube 215 and to a down tube 220. The down tube 220 extends to a bottom bracket 225, which is connected to a seat tube 230 and a pair of chain stays 235. The pair of chain stays 235 connect to a pair of seat stays 240. As shown, the seatmast 205 extends in an upward direction (i.e., relative to a ground surface on which the bicycle frame 200 is positioned upright) from the top tube 210. As also shown, a rear portion 212 of the top tube 210 extends to the rear of the bicycle frame, beyond the points of intersection between the seat stays 240 and the top tube 210 such that the top tube 210 acts as a cantilever. As a result, the seatmast 205 extends upward from the top tube 210 at a location on the top tube 210 that is to the rear of the points of intersection between the top tube 210 and the seat stays 240.

As discussed in more detail below, the seatmast is designed to receive a seatpost (or saddle post) that mounts within the female cavity formed by the seatmast 205. As a result, due to the cantilever configuration of the seatmast, the seat (or saddle) of the bicycle and the rider's weight are positioned on the cantilevered portion of the top tube 210 (i.e., the portion of the top tube that extends rearward from the points of intersection between the top tube and the seat stays). As the bicycle is ridden over bumps and other terrain, the mass of the rider pushing down on the cantilevered portion of the top tube 210 creates additional flex in the bicycle frame, and this added compliance acts as a built-in shock absorption system that improves rider comfort as compared to a traditional bicycle frame.

As shown in Fig. 2D, the seat stays 240, the seat tube 230, and the top tube 210 meet to form an opening 245. More specifically, in the depicted embodiment, a first support 250 and a second support 255 extend from the seat tube 230 to the seat stays 240 to form a portion of the opening. The first support 250 connects to a first of the seat stays 240 and the second support 255 connects to a second of the seat stays 240. As a result a circumference of the opening 245 is formed in part by an inward facing portion of a first of the seat stays 240, a bottom (or downward facing) portion of the top tube 210, an inward facing portion of a second of the seat stays 240, an upper portion of the first support 250, and an upper portion of the second support 255.

The proposed bicycle frame configuration also increases the torsional rigidity of the frame as compared to traditional frames. Specifically, the more forward point of intersection between seat stays and the top tube that forms the cantilever results in a bicycle frame that is less likely to twist in response to applied pressure or impact. This increases the overall torsional rigidity of the bicycle frame, which makes it more robust. The specific configuration of the bicycle frame also reduces the amount of material used, and thus the overall weight, as compared to traditional bicycle frames. As one example, the seat tube 230 can be of shorter length because it connects to the seat stays 240 as opposed to directly connecting to the seatmast and/or top tube, as in traditional bicycle frames.

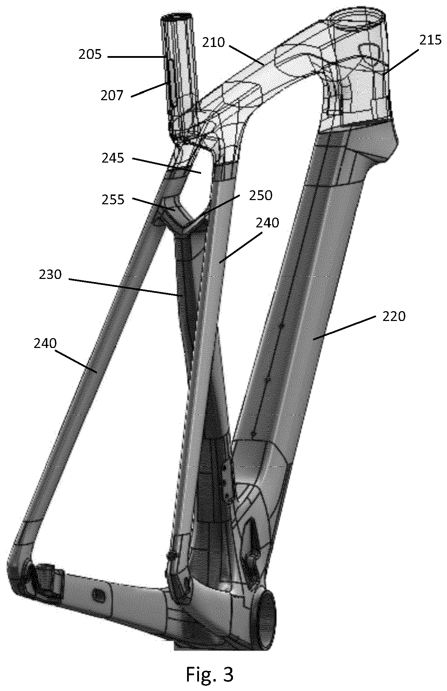

Fig. 3 is a rear perspective view of the bicycle frame 200 which more clearly shows the opening 245 formed below the seatmast 205 in accordance with an illustrative embodiment. In an illustrative embodiment, as the bicycle is ridden, turbulent air from the front triangle of the bicycle frame is conveyed toward and through the opening 245 to the rear of the bicycle frame such that the overall air resistance experienced by the rider is reduced. As the rider rides the bicycle, turbulent (i.e., high pressure) air is formed in and around the front triangle of the bicycle. The turbulent air forms as a result of air contacting the down tube, the head tube, the top tube, the handlebars, the rider's legs, etc. This high pressure turbulent air causes significant drag on the bicycle. Conversely, a low pressure (i.e., low turbulence) air zone or wake is formed behind the front triangle and the rider of the bicycle. The opening 245 formed by the present bicycle frame configuration acts as a conduit through which the turbulent air in the high pressure zone of the front triangle and the rider's legs is diverted to the rear of the bicycle and the rider into the low pressure zone. Removing this turbulent air from the front triangle of the bicycle frame reduces the friction/drag experienced by the bicycle and the rider and acts to energize (i.e., increase) the wake behind the seatmast region of the bicycle.

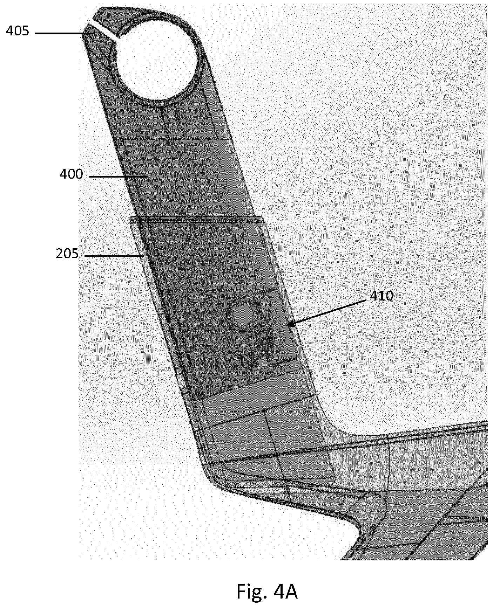

As discussed above, the seatmast includes a cavity that is sized to receive a seatpost, to which a saddle is mounted for the rider to sit on while cycling. Described below is a seatpost securing assembly which helps secure the seatpost within the seatmast, and which enables several different seatpost adjustment options for the rider. Fig. 4A is a close-up sectional view of a seatpost 400 mounted within the seatmast 205 in accordance with an illustrative embodiment. The seatpost 400 includes a clamp 405 configured to receive a saddle and a seatpost securing assembly 410 that is used to hold the seatpost 400 within the seatmast 205. In the view of Fig. 4A, the seatmast 205 is illustrated as partially transparent such that the seatpost securing assembly 410 can be seen.

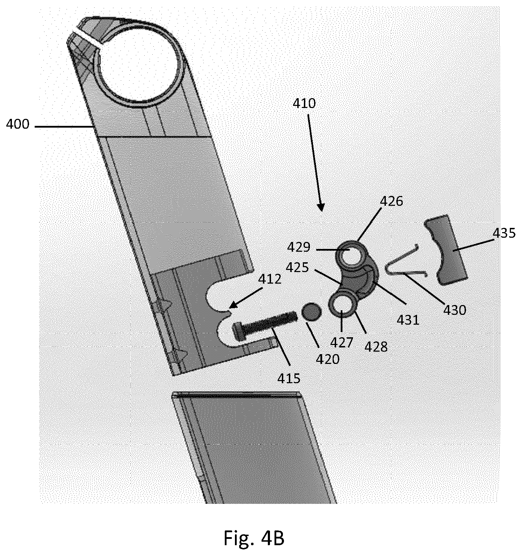

Fig. 4B is a cross-sectional view of the seatpost 400 included an exploded view of the seatpost securing assembly 410 in accordance with an illustrative embodiment. As shown the seatpost 400 includes a cavity 412 configured to receive the seatpost securing assembly 410. The cavity 412 includes a pair of rounded indents configured to receive the seatpost securing assembly 410. As shown, the cavity 412 is not enclosed. Rather, a frontmost portion of the cavity 412 is open such that the cavity 412 provides direct access to an interior of the seatmast in which the seatpost is to be positioned. The pair of rounded indents are positioned at a rearmost portion of the cavity 412.

The seatpost securing assembly 410 includes a compression bolt 415, a barrel nut 420, a cam lever 425, a retaining clip 430, and a wedge 435. In alternative implementations, the seatpost securing assembly 410 may include fewer, additional, and/or different components. In an illustrative embodiment, a rear-facing side of the seatmast 205 included one or more vertically-oriented elliptical slots (or openings) through which the compression bolt 415 is received. For example, the views of Fig. 2D and Fig. 3 depicts a slot 207 that receives the compression bolt 415. Alternatively, instead of an elliptical (or ovular) slot, the rear-facing side of the seatmast 205 can include one or more circular openings, one or more square openings, etc. Insertion and use of the compression bolt 415 is described in more detail below.

The compression bolt 415 is threaded and designed to mate with a female threaded opening in the barrel nut 420, and the barrel nut 420 is sized to fit within either of two openings in the cam lever 425. Specifically, the cam lever 425 includes a first portion 426 (at the top of the cam lever 425 in the orientation of Fig. 4B) that includes a first opening 427 and a second portion 428 (at the bottom of the cam lever 425 in the orientation of Fig. 4B) that includes a second opening 429. The cam lever 425 also includes a body 431 between the first portion 426 and the second portion 428 that is in the form a rounded bulge that is designed to press against the wedge 435. In an illustrative embodiment, either the first opening 427 or the second opening 429 can receive the barrel nut 420. As discussed in more detail below, the selection of which hole to place the barrel nut 420 into (in the cam lever 425), along with the orientation of the cam lever 425 and the vertical length of the slot(s) in the seatmast, can be used to provide adjustment options for the height of the seatpost 400. When the barrel nut 420 is seated in one of the first opening 427 or the second opening 429, the female threaded opening located along the shaft of the barrel nut 420 is oriented to receive the compression bolt 415.

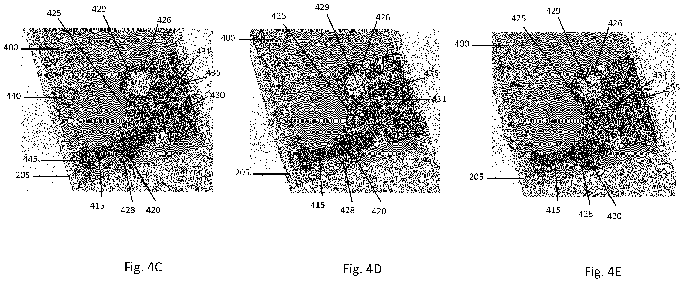

As the compression bolt 415 is threaded into the barrel nut 420 (which is seated in an opening in the cam lever 425), the cam lever 425 moves such that the wedge 435 is pressed against an interior surface of the seatmast into which the seatpost 400 is mounted. The retaining clip 430 is used to help ensure that the wedge 435 remains in contact with and secured to the cam lever 425. Figs. 4C-4E are cross-sectional partial views of an assembled seatpost securing assembly 410 depicting cam lever movement resulting from threading the compression bolt 415 into the barrel nut 420.

Specifically, Fig. 4C depicts a first position of the seatpost securing assembly 410 in accordance with an illustrative embodiment. As the compression bolt 415 is threaded into the barrel nut 420, the barrel nut 420 and hence the second portion 428 of the cam lever 425 is pushed toward the wedge 435 (i.e., toward a front of the seatpost). Fig. 4C depicts an initial position of the cam lever 425 relative to the wedge 435 as the compression bolt 415 begins to push the barrel nut 420 and the second portion 428 of the cam lever 425 forward. Fig. 4D depicts a second position of the seatpost securing assembly 410 in accordance with an illustrative embodiment. As the compression bolt 415 continues to be tightened, the body 431 of the cam lever 425 continues to press the wedge 435 up against an interior surface of the seatmast 205. As the body 431 of the cam lever 425 presses against the wedge 435, it can be seen in Fig. 4D (relative to Fig. 4C) that the first portion 426 of the cam lever 425 (i.e., the portion containing the second opening 429) gains separation from an upper portion of the wedge 435. Fig. 4E depicts a third position of the seatpost securing assembly 410 in accordance with an illustrative embodiment. It can be seen in Fig. 4E (relative to Fig. 4D) that the first portion 426 of the cam lever 425 (i.e., the portion containing the second opening 429) gains more separation from the upper portion of the wedge 435 as the compression bolt 415 continues to be tightened. This configuration ensures that the seatpost 400 is securely mounted within the seatmast as a result of the friction between the wedge 435 and the interior surface of the seatmast 205.

In an alternative embodiment, the threads of the compression bolt 415 and/or the barrel nut 420 can be reversed. In such an embodiment and referring to the configuration shown in Figs. 4C-4E, threading the compression bolt 415 into the barrel nut 420 can cause the second portion 428 of the cam lever 425 to be drawn toward a rear of the seatmast 205, which in turn causes the first portion 426 of the cam lever 425 to press against the upper portion of the wedge 435.

In the orientation shown in Figs. 4C-4E, the first portion 426 of the cam lever 425 and the first opening 429 are positioned toward the top of the seatpost securing assembly, and the second portion 428 of the cam lever 425 and the second opening 427 are positioned toward the bottom of the seatpost securing assembly. In an illustrative embodiment, the cam lever 425, wedge 435, barrel nut 420, and clip 430 can be flipped (i.e., rotated 180 degrees) such that the first portion 426 of the cam lever is positioned toward the top of the seatpost and the second portion 428 is positioned toward the bottom of the seatpost. Such flipping of the cam lever 425 from a first orientation to a second orientation allows the rider to control the overall height of the seatpost relative to the top of the seatmast. In the embodiment shown, the seatpost also includes two openings, an upper opening 440 and a lower opening 445, through which the compression bolt 415 can be inserted to provide different height options for the seatpost. As discussed herein, the use of dual slots in the seatpost allows the slots in the seatmast to be smaller as compared to traditional systems. In one alternative embodiment, a single opening in the seatpost 400 may be used. In another alternative embodiment, additional openings may be provided in the seatpost 400 to provide saddle height additional adjustment options. For example, the seatpost 400 may include 3 openings, 4 openings, 5 openings, etc.

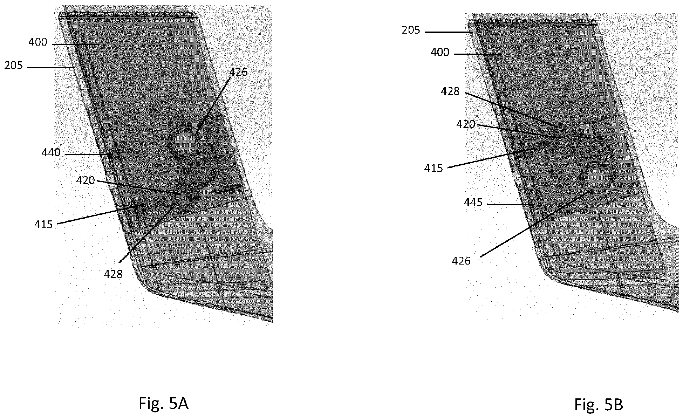

Fig. 5A depicts a first orientation of the cam lever 425 in accordance with an illustrative embodiment. Fig. 5B depicts a second orientation (flipped) of the cam lever 425 in accordance with an illustrative embodiment. In the embodiment of Fig. 5A, the first portion 426 of the cam lever 425 is positioned at the top and the second portion 428 of the cam lever 425 is positioned at the bottom of the cavity 412 formed in the seatpost 400. This is similar to the configuration shown in Figs. 4C-4E. In the embodiment of Fig. 5B, the first portion 426 of the cam lever 425 is positioned at the bottom and the second portion 428 of the cam lever 425 is positioned at the top of the cavity 412 formed in the seatpost 400. The cam lever 425 has thus been flipped (i.e., rotated 180 degrees) in the embodiment of Fig. 5B. In Fig. 5A, the compression bolt 415 is positioned in the lower opening 445 and in Fig. 5B the compression bolt 415 is positioned in the upper opening 440 of the seatpost 400.

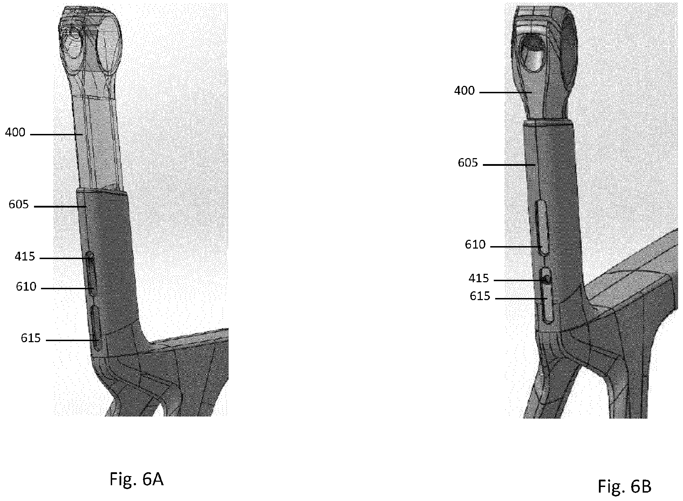

Additional height adjustment of the seatpost 400 can be performed by controlling the position (i.e., height) of the compression bolt 415 within the slot(s) formed in the rear side of the seatmast. Fig. 6A depicts the seatpost 400 mounted in a highest configuration in accordance with an illustrative embodiment. Fig. 6B depicts the seatpost 400 mounted in a lowest configuration in accordance with an illustrative embodiment. As shown, the seatpost 400 extends from a seatmast 605, and a rear-facing portion of the seatmast 605 includes an upper slot 610 and a lower slot 615, each of which is in the shape of a vertically-oriented ellipse/oval. In alternative embodiments, the seatmast 605 may include fewer or additional slots (e.g., 1, 3, 4, 5, etc.), and/or openings of a different shape such as circular, square, etc. The slots allow the rider or a bicycle mechanic to access the compression bolt 415 with a tool (e.g., M4 allen wrench or other tool) for easy removal and/or adjustment of the seatpost. Additionally, this slot design that involves the use of 2 separate slots with bicycle frame material (e.g., carbon, aluminum, etc.) in between the slots allows for a reduction of reinforcement to the frame since it allows for a shorter slot, and thus greater hoop strength for the seatmast. This benefit is achieved in part by the use of dual slots in the seatpost, which allows the slots in the seatmast to be smaller as compared to traditional systems.

In the embodiment of Fig. 6A, the compression bolt 415 of the seatpost securing assembly is positioned at a highest position in the upper slot 610 of the seatmast 605. Additionally, the cam lever 425 is positioned such that the first portion 426 is on top and the second portion 428 is on the bottom, similar to the embodiment shown in Fig. 5A. Also in Fig. 6A, the compression bolt 415 is threaded into the lower opening 445, which in turn maximizes the height of the seatpost 400.

In the embodiment of Fig. 6B, the compression bolt 415 of the seatpost securing assembly is positioned in the lower slot 615 of the seatmast 605. Additionally, the cam lever 425 is positioned such that the first portion 426 is on the bottom and the second portion 428 is on the top, similar to the embodiment shown in Fig. 5B. Also in Fig. 6B, the compression bolt 415 is threaded into the upper opening 440, which in turn minimizes the height of the seatpost 400. In addition to flipping the cam lever and wedge, intermediate height adjustments of the seatpost can be performed by adjusting the seatpost securing assembly within the slot(s) in the rear of the seatmast, by changing which opening in the seatpost receives the compression bolt, and/or by changing which opening in the cam lever receives the barrel nut.

The word "illustrative" is used herein to mean serving as an example, instance, or illustration. Any aspect or design described herein as "illustrative" is not necessarily to be construed as preferred or advantageous over other aspects or designs. Further, for the purposes of this disclosure and unless otherwise specified, "a" or "an" means "one or more".

The foregoing description of illustrative embodiments of the invention has been presented for purposes of illustration and of description. It is not intended to be exhaustive or to limit the invention to the precise form disclosed, and modifications and variations are possible in light of the above teachings or may be acquired from practice of the invention. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto.

## Claims

1. A bicycle frame comprising:
a top tube (24, 210) that connects to a head tube (28, 215) at a front portion of the bicycle frame;
a down tube (26, 220) that extends from the head tube (28, 215) to a bottom bracket (225);
a seat tube (22, 230) that extends from the bottom bracket;
a first seat stay (65, 240) that connects to the top tube at a first point of intersection and a second seat stay (65, 240) that connects to the top tube at a second point of intersection such that a back portion of the top tube extends beyond the first point of intersection and the second point of intersection so that the top tube is a cantilever;
a seatmast (21, 90, 205, 605) sized to receive a seatpost (20, 400), wherein the seatmast extends from the back portion of the top tube that forms the cantilever; **characterized by** a first support (250) that extends from the seat tube (22, 230) to the first seat stay (65, 240) and a second support (255) that extends from the seat tube to the second seat stay (65, 240); and
an opening (245) formed under the top tube (24, 210) and under the seatmast (21, 90, 205, 605) and configured to convey turbulent air from underneath the top tube to behind the bicycle frame, wherein at least a portion of the opening is formed by a bottom portion of the top tube, at least a portion of the opening is formed by the first seat stay (65, 240) and the second seat stay (65, 240), and at least a portion of the opening is formed by the first support (250) and the second support (255).

2. The bicycle frame of claim 1, further comprising a first chain stay (66, 235) that extends from the bottom bracket (225) to the first seat stay and a second chain stay (66, 235) that extends from the bottom bracket to the second seat stay (65, 240).

3. The bicycle frame of any preceding claim, further comprising a plurality of slots (610, 615) in a rear-facing portion of the seatmast (605).

4. The bicycle frame of any preceding claim, further comprising the seatpost mounted in the seatmast (90, 205), wherein the seatpost (20, 400) includes a cavity configured to receive a seatpost securing assembly (410).

5. The bicycle frame of claim 4, wherein the seatpost securing assembly (410) includes a compression bolt (415), and wherein the seatpost (20, 400) includes a plurality of openings sized to receive the compression bolt (415).

6. The bicycle frame of claim 5, wherein the plurality of openings are adjacent to the cavity of the seatpost (20, 400) that includes the seatpost securing assembly (410).

7. The bicycle frame of claim 5 or 6 taken dependent on claim 3, wherein the plurality of openings are aligned with the plurality of slots (610, 615) in the rear-facing portion of the seatmast (90, 205).

8. The bicycle frame of any one of claims 4 to 7, wherein the seatpost securing assembly (410) includes a cam lever (425) and a wedge (435), wherein the cam lever (425) is configured to press the wedge (435) against an interior surface of the seatmast (90, 205) to secure the seatpost (20, 400) to the seatmast (90, 205).

9. The bicycle frame of claim 8 taken dependent on any one of the claims 5 to 7, wherein the cam lever (425) includes a first opening (427) configured to receive a barrel nut (420), and wherein the barrel nut (420) includes a threaded opening configured to receive the compression bolt (415).

10. The bicycle frame of claim 9, wherein, responsive to being rotated, the compression bolt (415) pushes the barrel nut (420) and at least a portion of the cam lever (425) toward the wedge (435) and causes the wedge (435) to contact the interior surface of the seatmast (90, 205).

11. The bicycle frame of claim 9 or 10, wherein the cam lever (425) also includes a second opening (429) configured to receive the barrel nut (420).

12. The bicycle frame of any one of claims 9 to 11, wherein the cam lever (425) controls a height of the seatpost (20, 400) based at least in part on an orientation of the cam lever (425) within the seatpost (20, 400).

## Patentansprüche

1. Fahrradrahmen, umfassend:
ein Oberrohr (24, 210), das sich mit einem Steuerrohr (28, 215) an einem vorderen Abschnitt des Fahrradrahmens verbindet;
ein Unterrohr (26, 220), das sich von dem Steuerrohr (28, 215) zu einem Tretlager (225) erstreckt;
ein Sitzrohr (22, 230), das sich von dem Tretlager erstreckt;
eine erste Sitzstrebe (65, 240), die sich mit dem Oberrohr an einem ersten Schnittpunkt verbindet, und eine zweite Sitzstrebe (65, 240), die sich mit dem Oberrohr an einem zweiten Schnittpunkt verbindet, sodass sich ein hinterer Abschnitt des Oberrohrs über den ersten Schnittpunkt und den zweiten Schnittpunkt erstreckt, sodass das Oberrohr ein Cantilever ist;
einen Sitzturm (21, 90, 205, 605), der so bemessen ist, dass er eine Sattelstütze (20, 400) aufnimmt, wobei sich der Sitzturm von dem hinteren Abschnitt des Oberrohrs erstreckt, das den Cantilever bildet; **gekennzeichnet durch** einen ersten Träger (250), der sich von dem Sitzrohr (22, 230) zu der ersten Sitzstrebe (65, 240) erstreckt, und einen zweiten Träger (255), der sich von dem Sitzrohr zu der zweiten Sitzstrebe (65, 240) erstreckt; und
eine Öffnung (245), die unter dem Oberrohr (24, 210) und unter dem Sitzturm (21, 90, 205, 605) gebildet ist und konfiguriert ist, um turbulente Luft von unterhalb dem Oberrohr zu hinter dem Fahrradrahmen zu befördern, wobei mindestens ein Abschnitt der Öffnung durch einen unteren Abschnitt des Oberrohrs gebildet ist, mindestens ein Abschnitt der Öffnung durch die erste Sitzstrebe (65, 240) und die zweite Sitzstrebe (65, 240) gebildet ist und mindestens ein Abschnitt der Öffnung durch den ersten Träger (250) und den zweiten Träger (255) gebildet ist.

2. Fahrradrahmen nach Anspruch 1, ferner umfassend eine erste Kettenstrebe (66, 235), die sich von dem Tretlager (225) zu der ersten Sitzstrebe erstreckt, und eine zweite Kettenstrebe (66, 235), die sich von dem Tretlager zu der zweiten Sitzstrebe (65, 240) erstreckt.

3. Fahrradrahmen nach einem vorhergehenden Anspruch, ferner umfassend eine Vielzahl von Schlitzen (610, 615) in einem nach hinten gerichteten Abschnitt des Sitzturms (605).

4. Fahrradrahmen nach einem vorhergehenden Anspruch, ferner umfassend die Sattelstütze, die in dem Sitzturm (90, 205) montiert ist, wobei die Sattelstütze (20, 400) einen Hohlraum beinhaltet, der konfiguriert ist, um eine Sattelstütze-sichernde Baugruppe (410) aufzunehmen.

5. Fahrradrahmen nach Anspruch 4, wobei die Sattelstütze-sichernde Baugruppe (410) eine Kompressionsschraube (415) beinhaltet und wobei die Sattelstütze (20, 400) eine Vielzahl von Öffnungen beinhaltet, die bemessen sind, um die Kompressionsschraube (415) aufzunehmen.

6. Fahrradrahmen nach Anspruch 5, wobei die Vielzahl von Öffnungen benachbart zu dem Hohlraum der Sattelstütze (20, 400) sind, die die Sattelstütze-sichernde Baugruppe (410) beinhaltet.

7. Fahrradrahmen nach Anspruch 5 oder 6 in Abhängigkeit von Anspruch 3, wobei die Vielzahl von Öffnungen mit der Vielzahl von Schlitzen (610, 615) in dem nach hinten gerichteten Abschnitt des Sitzturms (90, 205) ausgerichtet sind.

8. Fahrradrahmen nach einem der Ansprüche 4 bis 7, wobei die Sattelstütze-sichernde Baugruppe (410) einen Exzenterhebel (425) und einen Keil (435) beinhaltet, wobei der Exzenterhebel (425) konfiguriert ist, um den Keil (435) gegen eine Innenfläche des Sitzturms (90, 205) zu drücken, um die Sattelstütze (20, 400) an dem Sitzturm (90, 205) zu befestigen.

9. Fahrradrahmen nach Anspruch 8 in Abhängigkeit von einem der Ansprüche 5 bis 7, wobei der Exzenterhebel (425) eine erste Öffnung (427) beinhaltet, konfiguriert, um eine Zylindermutter (420) aufzunehmen, und wobei die Zylindermutter (420) eine Gewindeöffnung beinhaltet, die konfiguriert ist, um die Kompressionsschraube (415) aufzunehmen.

10. Fahrradrahmen nach Anspruch 9, wobei, als Reaktion darauf, dass sie gedreht wird, die Kompressionsschraube (415) die Zylindermutter (420) und mindestens einen Abschnitt des Exzenterhebels (425) zu dem Keil (435) drückt und verursacht, dass der Keil (435) die Innenfläche des Sitzturms (90, 205) berührt.

11. Fahrradrahmen nach Anspruch 9 oder 10, wobei der Exzenterhebel (425) außerdem eine zweite Öffnung (429) beinhaltet, die konfiguriert ist, um die Zylindermutter (420) aufzunehmen.

12. Fahrradrahmen nach einem der Ansprüche 9 bis 11, wobei der Exzenterhebel (425) eine Höhe der Sattelstütze (20, 400) steuert, basierend mindestens teilweise auf einer Ausrichtung des Exzenterhebels (425) in der Sattelstütze (20, 400).

## Revendications

1. Cadre de vélo, comprenant :
un tube supérieur (24, 210) qui se raccorde à un tube de direction (28, 215) dans une partie avant du cadre de vélo ;
un tube diagonal (26, 220) qui s'étend depuis le tube de direction (28, 215) jusqu'à un boîtier de pédalier (225) ;
un tube de selle (22, 230) qui s'étend depuis le boîtier de pédalier ;
un premier hauban (65, 240) qui se raccorde au tube supérieur à un premier point d'intersection et un second hauban (65, 240) qui se raccorde au tube supérieur à un second point d'intersection de manière telle qu'une partie arrière du tube supérieur s'étend au-delà du premier point d'intersection et du second point d'intersection de telle sorte que le tube supérieur est un porte-à-faux ;
un mât de selle (21, 90, 205, 605) dimensionné pour recevoir une tige de selle (20, 400), dans lequel le mât de selle s'étend depuis la partie arrière du tube supérieur qui forme le porte-à-faux ; **caractérisé par** un premier support (250) qui s'étend depuis le tube de selle (22, 230) jusqu'au premier hauban (65, 240) et un second support (255) qui s'étend depuis le tube de selle jusqu'au second hauban (65, 240) ; et
une ouverture (245) formée sous le tube supérieur (24, 210) et sous le mât de selle (21, 90, 205, 605) et configurée pour transporter de l'air turbulent depuis en dessous du tube supérieur jusqu'à derrière le cadre de vélo, dans lequel au moins une partie de l'ouverture est formée par une partie inférieure du tube supérieur, au moins une partie de l'ouverture est formée par le premier hauban (65, 240) et le second hauban (65, 240), et au moins une partie de l'ouverture est formée par le premier support (250) et le second support (255).

2. Cadre de vélo de la revendication 1, comprenant en outre une première base (66, 235) qui s'étend depuis le boîtier de pédalier (225) jusqu'au premier hauban et une seconde base (66, 235) qui s'étend depuis le boîtier de pédalier jusqu'au second hauban (65, 240).

3. Cadre de vélo d'une quelconque revendication précédente, comprenant en outre une pluralité de fentes (610, 615) dans une partie, tournée vers l'arrière, du mât de selle (605).

4. Cadre de vélo d'une quelconque revendication précédente, comprenant en outre la tige de selle montée dans le mât de selle (90, 205), dans lequel la tige de selle (20, 400) inclut une cavité configurée pour recevoir un ensemble de fixation de tige de selle (410).

5. Cadre de vélo de la revendication 4, dans lequel l'ensemble de fixation de tige de selle (410) inclut un boulon de compression (415), et dans lequel la tige de selle (20, 400) inclut une pluralité d'ouvertures dimensionnées pour recevoir le boulon de compression (415).

6. Cadre de vélo de la revendication 5, dans lequel la pluralité d'ouvertures sont adjacentes à la cavité de la tige de selle (20, 400) qui inclut l'ensemble de fixation de tige de selle (410).

7. Cadre de vélo de la revendication 5 ou 6 lorsqu'elle dépend de la revendication 3, dans lequel la pluralité d'ouvertures sont alignées avec la pluralité de fentes (610, 615) dans la partie, tournée vers l'arrière, du mât de selle (90, 205).

8. Cadre de vélo de l'une quelconque des revendications 4 à 7, dans lequel l'ensemble de fixation de tige de selle (410) inclut un levier à came (425) et une cale (435), dans lequel le levier à came (425) est configuré pour presser la cale (435) contre une surface intérieure du mât de selle (90, 205) pour fixer la tige de selle (20, 400) au mât de selle (90, 205).

9. Cadre de vélo de la revendication 8 lorsqu'elle dépend de l'une quelconque des revendications 5 à 7, dans lequel le levier à came (425) inclut une première ouverture (427) configurée pour recevoir un écrou cylindrique (420), et dans lequel l'écrou cylindrique (420) inclut une ouverture filetée configurée pour recevoir le boulon de compression (415).

10. Cadre de vélo de la revendication 9, dans lequel, en réponse au fait d'être tourné, le boulon de compression (415) pousse l'écrou cylindrique (420) et au moins une partie du levier à came (425) vers la cale (435) et amène la cale (435) à entrer en contact avec la surface intérieure du mât de selle (90, 205).

11. Cadre de vélo de la revendication 9 ou 10, dans lequel le levier à came (425) inclut également une seconde ouverture (429) configurée pour recevoir l'écrou cylindrique (420).

12. Cadre de vélo de l'une quelconque des revendications 9 à 11, dans lequel le levier à came (425) commande une hauteur de la tige de selle (20, 400) sur la base au moins en partie d'une orientation du levier à came (425) à l'intérieur de la tige de selle (20, 400).
